# EUROPÄISCHE PATENTSCHRIFT

(11) **EP 4 400 288 B1**
(45) Veröffentlichungstag und Bekanntmachung des Hinweises auf die Patenterteilung: **05.11.2025**
(21) Anmeldenummer: 23219204.7
(22) Anmeldetag: 21.12.2023
(51) Int. Cl.: B29C 65/16, B29C 65/00, B29K 105/00

(54) **VERFAHREN ZUM LASER-DURCHSTRAHLFÜGEN SOWIE FÜGEEINRICHTUNG UND VORRICHTUNG HIERFÜR**
METHOD FOR LASER TRANSMISSION JOINING AND JOINING DEVICE AND DEVICE THEREFOR
PROCÉDÉ D'ASSEMBLAGE PAR TRANSMISSION LASER AINSI QUE DISPOSITIF D'ASSEMBLAGE ET DISPOSITIF CORRESPONDANT

(30) Priorität: 11.01.2023 DE 102023200177
(43) Veröffentlichungstag der Anmeldung: 17.07.2024
(73) Patentinhaber: LPKF Laser & Electronics SE, 30827 Garbsen (DE)
(72) Erfinder: Schwalme, Michael, 91413 Neustadt an der Aisch (DE); Kalb, Philipp, 90427 Nürnberg (DE); Singer, André, 91077 Dormitz (DE)
(74) Vertreter: Rau, Schneck & Hübner Patentanwälte Rechtsanwälte PartGmbB

(56) Entgegenhaltungen:
- JP-A- 2016 083 799
- US-A1- 2005 234 527

## Beschreibung

Die vorliegende Patentanmeldung nimmt die Priorität der deutschen Patentanmeldung DE 10 2023 200 711.2 in Anspruch, deren Inhalt durch Bezugnahme hierin aufgenommen wird.

Die Erfindung betrifft ein Verfahren zum Laser-Durchstrahlfügen zweier Bauteile gemäß dem Oberbegriff des Anspruchs 1. Die Erfindung betrifft weiterhin eine Fügeeinrichtung für das Laser-Durchstrahlfügen und eine Vorrichtung für das Laser-Durchstrahlfügen mit einer derartigen Fügeeinrichtung.

Das Laser-Durchstrahlfügen, auch Laser-Durchstrahlschweißen genannt, ist bekannt. Es wird für viele Anwendungen industriell zur Verbindung eines Bauteils aus einem laserabsorbierenden Material (laserabsorbierendes Bauteil) mit einem Bauteil aus einem lasertransmissiven Material (lasertransmissives Bauteil) eingesetzt. Im Regelfall sind die zu fügenden Bauteile aus thermoplastischem Material. Laserstrahlung wird durch das laser-transmissive Bauteil auf das laserabsorbierende Bauteil auf einen Schweißbereich eingestrahlt, wobei es verschiedene Möglichkeiten zum Einstrahlen der Laserstrahlung gibt, beispielsweise mittels Strahlführungen, insbesondere in Simultanschweißanlagen, mittels eines entlang der Schweißnaht verlagerbaren Roboters oder durch Laserscanner, insbesondere beim sogenannten Quasi-Simultanschweißen. Insbesondere bei letzterem Verfahren trifft die Laserstrahlung nicht senkrecht auf eine Einstrahlfläche des lasertransmissiven Bauteils. Aufgrund der Brechung im lasertransmissiven Bauteil wird die Laserstrahlung abgelenkt und, insbesondere bei langen Durchtrittswegen, mehrfach an Grenzflächen des lasertransmissiven Bauteils reflektiert. Dies kann dazu führen, dass die Laserstrahlung den Schweißbereich nicht oder nur unvollständig abdeckt. In einzelnen Bereichen kommt es nicht zu einer genügenden Verschweißung, während in anderen Bereichen Verbrennungen des Bauteils resultieren. Diese Problematik ist besonders ausgeprägt bei lasertransmissiven Bauteilen aus einem amorphen Material und/oder bei unebenen Einstrahlflächen, beispielsweise gekrümmten Einstrahlflächen. Dies schränkt die Verarbeitbarkeit derartiger Bauteile, insbesondere mittels Laserscannern, ein.

Die JP 2016 083799 A beschreibt ein Verfahren und eine Vorrichtung für das Laserschweißen. Die US 2005/0234527 A1 offenbart ein Verfahren und eine Vorrichtung zur Verbesserung der Sicherheit bei der Bestrahlung mit einer monochromatischen Lichtquelle.

Vor diesem Hintergrund ist es die Aufgabe der vorliegenden Erfindung, das Laser-Durchstrahlfügen zweier Bauteile zu verbessern, insbesondere eine gleichmäßige Einstrahlung der Laserstrahlung auf den Schweißbereich, unabhängig von Oberflächenkontur und Material des lasertransmissiven Bauteils zu gewährleisten.

Diese Aufgabe wird gelöst durch ein Verfahren zum Laser-Durchstrahlfügen zweier Bauteile mit den in Anspruch 1 angegebenen Schritten. Die Aufgabe wird zudem gelöst durch eine Fügeeinrichtung gemäß Anspruch 8 sowie eine Vorrichtung zum Laser-Durchstrahlfügen gemäß Anspruch 13. Vorteilhafte Weiterbildungen sind Gegenstand der Unteransprüche.

Das Verfahren zum Laser-Durchstrahlfügen zweier Bauteile weist die folgenden Schritte auf: Bereitstellen eines lasertransmissiven Bauteils und eines laserabsorbierenden Bauteils, Anordnen der Bauteile zueinander in einer Fügeposition, Aufbringen eines Fügedrucks auf die Bauteile in der Fügeposition und Einstrahlen von Laserstrahlung durch das lasertransmissive Bauteil auf das laserabsorbierende Bauteil zum Verschweißen der Bauteile in einem Schweißbereich. Die Laserstrahlung wird vor oder beim Eintritt in das lasertransmissive Bauteil diffus gestreut.

Erfindungsgemäß wird die Laserstrahlung mittels einer Diffusorkomponente gestreut, wobei die Diffusorkomponente auf der Einstrahlfläche des lasertransmissiven Bauteils angeordnet ist. Dies ermöglicht eine Streuung im Bereich der Einstrahlfläche unabhängig von den weiteren Eigenschaften des lasertransmissiven Bauteils, insbesondere unabhängig von dessen Oberflächeneigenschaften. Als Diffusorkomponente können gängige Diffusoren, beispielsweise Streuscheiben aus Quarzglas, eingesetzt werden. Als besonders geeignet haben sich lasertransmissive Komponenten mit einer aufgerauten Oberfläche erwiesen. Die aufgeraute Oberfläche der Diffusorkomponente wird hier und im Folgenden auch als Streufläche bezeichnet.

Es wurde erkannt, dass durch die diffuse Streuung der Laserstrahlung die nachteiligen Effekte der Lichtbrechung im lasertransmissiven Bauteil vermindert, insbesondere vermieden werden. Eine ungewollte Fokussierung der Laserstrahlung auf Teile des Schweißbereichs findet nicht statt. Der Eintrag der Laserstrahlung auf den Schweißbereich ist homogen. Vorteilhafterweise ist ein zuverlässiges Verschweißen im gesamten Schweißbereich unabhängig von Kontur der Einstrahlfläche und/oder Material des lasertransmissiven Bauteils gewährleistet. Unerwünschte Verbrennungen an den Bauteilen sind vermieden.

Ein besonderer Vorteil des Verfahrens ist, dass die Anwendungsmöglichkeiten des Laser-Durchstrahlfügens, insbesondere mittels Laserscanner basierten Verfahren, erweitert sind. Das lasertransmissive Bauteil kann insbesondere aus einem amorphen Material sein, beispielsweise aus Polycarbonat (PC). Eine Einstrahlfläche des lasertransmissiven Bauteils, auf die die Laserstrahlung eingestrahlt wird, kann uneben, insbesondere gekrümmt, sein. Die Kontur der Einstrahlfläche kann sich insbesondere entlang eines Schweißwegs, den die Laserstrahlung abfährt, variieren. Vorzugsweise ist auch das Fügen von lasertransmissiven Bauteilen möglich, die einen langen Durchtrittsweg für den Laser bedingen, in denen insbesondere ein oder mehrmals eine Reflexion der Laserstrahlung an zeitlichen Grenzflächen nicht ausgeschlossen werden kann.

Gemäß einem bevorzugten Aspekt des Verfahrens wird die Laserstrahlung auf den Schweißbereich mittels eines Laserscanners eingestrahlt. Der Laserscanner kann insbesondere einen Schweißweg mit fokussierter Laserstrahlung abfahren. Laserscanner-basierte Verfahren sind wirtschaftlich und einfach an die jeweilige Anwendung anpassbar. Teure Anlagen bzw. Werkzeuge für das Simultanschweißen und/oder Robotik zum Abfahren eines Schweißwegs wird nicht benötigt. Bevorzugt erfolgt die Einstrahlung der Laserstrahlung im Quasi-Simultanschweißverfahren. Dies führt zu kurzen Prozesszeiten und erhöht die Wirtschaftlichkeit des Verfahrens weiter.

Gemäß einem bevorzugten Aspekt des Verfahrens wird die Laserstrahlung im Bereich der Einstrahlfläche des lasertransmissiven Bauteils gestreut.

Besonders vorteilhaft ist es, wenn die Strahlung direkt benachbart zu der Einstrahlfläche, insbesondere bei deren Eintritt in das lasertransmissive Bauteil, gestreut wird. Dies maximiert den Eintrag der gestreuten Laserstrahlung in das lasertransmissive Bauteil. Verlustleistung durch weggestreute Strahlung ist vermieden. Ein Einstrahlen der Laserstrahlung auf benachbarte Bauteilbereiche ist vermieden.

Insbesondere ist es möglich, die Laserstrahlung an der Einstrahlfläche des lasertransmissiven Bauteils selbst zu streuen, indem die Einstrahlfläche eine geeignete Oberflächenrauheit aufweist. Beispielsweise kann das laser-transmissive Bauteil mit aufgerauter Oberfläche gefertigt werden oder dessen Oberfläche im Nachhinein aufgeraut werden. Auf diese Weise ist eine diffuse Streuung der Laserstrahlung möglich, ohne zusätzlichen Rüstaufwand. Allerdings kann die aufgeraute Oberfläche die Qualität des Bauteils, insbesondere dessen optische Anmutung, beeinträchtigen. Insbesondere in Funktionsbauteilen, in medizintechnischen Anwendungen und/oder im Consumerbereich ist ein Aufrauen der Bauteiloberfläche daher oftmals unerwünscht.

Gemäß einem bevorzugten Aspekt des Verfahrens ist die Diffusorkomponente in Form einer lasertransmissiven Folie auf die Einstrahlfläche des lasertransmissiven Bauteils aufgebracht, insbesondere aufgeklebt. Die Diffusorkomponente kann einfach positioniert und befestigt werden. Ein Einfluss der Diffusorkomponente auf die sonstige Anlagentechnik, insbesondere auf ein Spannwerkzeug, ist minimiert. Die Folie kann einfach und flexibel an die Oberflächenkontur des lasertransmissiven Bauteils angepasst werden, insbesondere können Fertigungstoleranzen leicht ausgeglichen werden. Die Folie kann speziell für das Laser-Durchstrahlfügen aufgebracht werden oder bereits zu einem früheren Zeitpunkt, beispielsweise um die Oberfläche des lasertransmissiven Bauteils nach dessen Fertigung und beim Transport zu schützen.

Die Folie weist insbesondere eine Transmissivität von mehr als 20 %, insbesondere mehr als 50 %, auf. Die Diffusorkomponente ist bevorzugt aus transparentem Kunststoff gefertigt, beispielsweise aus Polymethylmethacrylat (PMMA, auch Acrylglas genannt).

Gemäß einem bevorzugten Aspekt des Verfahrens wird die Diffusorkomponente als Teil eines Spannwerkzeugs, insbesondere als Teil eines Spannstempels, an dem lasertransmissiven Bauteil angeordnet. Mithilfe eines Spannwerkzeugs wird in bekannter Weise der Fügedruck auf die Bauteile aufgebracht. Das Anordnen der Diffusorkomponente als Teil des Spannwerkzeugs ermöglicht die Positionierung und Verwendung der Diffusorkomponente ohne zusätzliche Verfahrensschritte, insbesondere ohne separate Positionierung und Befestigung der Diffusorkomponente.

Die Diffusorkomponente kann beispielsweise in Form eines Durchtrittsfensters in dem Spannwerkzeug ausgebildet sein. Die Diffusorkomponente kann auch als Teil eines insgesamt lasertransmissiven Spannwerkzeugs ausgebildet sein. Beispielsweise ist das Durchtrittsfenster oder das laser-transmissive Spannwerkzeug in einem der Einstrahlfläche des lasertransmissiven Bauteils zugehörigen, insbesondere zugewandten, Oberflächenbereich aufgeraut.

Gemäß einem bevorzugten Aspekt des Verfahrens weist die Diffusorkomponente eine aufgeraute Oberfläche auf. Eine aufgeraute Oberfläche der Diffusorkomponente hat den Vorteil einer gezielten und einstellbaren Streuung der Laserstrahlung. Insbesondere kann die Intensität der Streuung durch den Mittenrauwert der Streufläche eingestellt werden. Der Mittenrauwert (Ra) kann insbesondere zwischen 0,5 µm und 100 µm, bevorzugt zwischen 3,2 µm und 50 µm, betragen. Vorteilhaft ist insbesondere, dass die Streuung der Laserstrahlung in direkter Nachbarschaft zu der Einstrahlfläche, also im Bereich einer Grenzfläche des lasertransmissiven Bauteils, erfolgt. Eine Verlustleistung durch weggestreute Laserstrahlung ist minimiert.

Besonders bevorzugt ist diejenige Oberfläche der Diffusorkomponente, die der Einstrahlfläche zugewandt ist, aufgeraut. Dies ermöglicht ein Streuen der Laserstrahlung unmittelbar vor Eintritt in das lasertransmissive Bauteil. Diesbezüglich ist es besonders vorteilhaft, die Diffusorkomponente aus einem transparenten Kunststoff zu fertigen, um Einwirkungen der aufgerauten Oberfläche auf die Einstrahlfläche zu reduzieren.

Insbesondere bei Verwendung einer lasertransmissiven Folie als Diffusorkomponente kann in vorteilhafter Weise die dem lasertransmissiven Bauteil abgewandte Oberfläche aufgeraut sein. Beispielsweise kann die Folie nach Aufbringen, insbesondere Aufkleben, auf das lasertransmissive Bauteil an deren Außenseite aufgeraut werden. Dies erleichtert die hierfür erforderliche Bearbeitung der Folie. Ein Anhaften der Folie ist durch die Streufläche nicht beeinträchtigt.

Gemäß einem vorteilhaften Aspekt des Verfahrens wird die Laserstrahlung auf die Einstrahlfläche des lasertransmissiven Bauteils eingestrahlt, wobei die Einstrahlfläche uneben, insbesondere gekrümmt, ist. Das Verfahren eignet sich vorteilhafterweise zum Fügen komplexer Bauteile. Beispielsweise kann die Einstrahlfläche entlang des Schweißwegs unterschiedliche Oberflächenkonturen, beispielsweise unterschiedliche Krümmungen, Neigungen und/oder Unebenheiten, aufweisen.

Eine Fügeeinrichtung für das Laser-Durchstrahlfügen eines laserabsorbierenden Bauteils mit einem lasertransmissiven Bauteil weist ein Spannwerkzeug zum Aufbringen eines Fügedrucks auf die Bauteile in einer Fügeposition und eine Diffusorkomponente zur diffusen Streuung von einzustrahlender Laserstrahlung vor deren Eintritt in das lasertransmissive Bauteil auf. Die Diffusorkomponente ist vorteilhafterweise an dem lasertransmissiven Bauteil, insbesondere im Bereich dessen Einstrahlfläche, anordenbar. Die Fügeeinrichtung ermöglicht in besonders vorteilhafter Weise die Durchführung des oben beschriebenen Verfahrens und damit die Erzielung entsprechender Vorteile.

Das Spannwerkzeug dient zum Aufbringen des Fügedrucks. Das Spannwerkzeug kann insbesondere eine Auflage, beispielsweise eine Aufnahme, für das laserabsorbierende Bauteil und einen Spannstempel zum Anpressen des lasertransmissiven Bauteils an das laserabsorbierende Bauteil aufweisen.

Erfindungsgemäß ist die Diffusorkomponente als Teil des Spannwerkzeugs, insbesondere als Teil des Spannstempels, ausgeführt. Die Diffusorkomponente kann beispielsweise in Form eines lasertransmissiven Durchtrittsfensters in dem Spannwerkzeug, insbesondere in dem Spannstempel, ausgebildet sein. Die Diffusorkomponente kann auch Teil eines lasertransmissiven Spannstempels sein. Beispielsweise kann der Spannstempel in einem der Einstrahlfläche zugewandten Bereich aufgeraut sein. Die Diffusorkomponente ist mit dem Spannstempel präzise an dem lasertransmissiven Bauteil anordenbar.

Gemäß einem bevorzugten Aspekt der Fügeeinrichtung weist die Diffusorkomponente eine aufgeraute Oberfläche auf, insbesondere mit einem Mittenrauwert von 0,5 µm bis 100 µm, bevorzugt von 3,2 µm bis 50 µm. Eine aufgeraute Oberfläche der Diffusorkomponente ermöglicht eine einfache, einstellbare und gezielte Streuung der Laserstrahlung, vorzugsweise in direkter Nachbarschaft zu der Einstrahlfläche des lasertransmissiven Bauteils. Beispielsweise kann die Diffusorkomponente an einer dem lasertransmissiven Bauteil zugewandten Oberfläche aufgeraut sein.

Gemäß einem bevorzugten Aspekt der Fügeeinrichtung ist die Diffusorkomponente an eine Oberflächenkontur der Einstrahlfläche des lasertransmissiven Bauteils angepasst. Bevorzugt kann die Diffusorkomponente eine Negativform des lasertransmissiven Bauteils im Bereich der Einstrahlfläche sein. Die Diffusorkomponente ist einfach und präzise an dem lasertransmissiven Bauteil anordenbar. Dies gewährleistet eine gezielte Streuung im Bereich der Einstrahlfläche. Die Diffusorkomponente ist bevorzugt aus transparentem Kunststoff, insbesondere aus PMMA, gefertigt. Dies erleichtert die Herstellung entsprechender Oberflächenkonturen der Diffusorkomponente. Die Diffusorkomponente kann beispielsweise im Spritzguss gefertigt werden.

Gemäß einem weiteren bevorzugten Aspekt der Fügeeinrichtung umfasst die Diffusorkomponente eine aufgeraute lasertransmissive Folie, die auf der Einstrahlfläche aufbringbar, insbesondere aufklebbar ist. Die Folie kann insbesondere an einer dem lasertransmissiven Bauteil abgewandten Oberfläche aufgeraut sein. Einflüsse auf die sonstige Spanntechnik sind minimiert. Die Folie kann beispielsweise nachgerüstet werden in bestehenden Fügeeinrichtungen.

Eine Vorrichtung zum Laser-Durchstrahlfügen eines laserabsorbierenden Bauteils mit einem lasertransmissiven Bauteil weist eine Fügeeinrichtung, wie sie oben beschrieben ist, und einen Laserscanner zum Einstrahlen von Laserstrahlung auf den Schweißbereich auf. Die Vorrichtung dient zur Durchführung des oben beschriebenen Verfahrens und weist dessen Vorteile auf. Die Vorrichtung kann insbesondere zur Durchführung eines Quasi-Simultanschweißprozesses ausgebildet sein.

Weitere Merkmale, Einzelheiten und Vorteile der Erfindung ergeben sich aus der nachfolgenden Beschreibung mehrerer Ausführungsbeispiele anhand der beigefügten Zeichnungen. Es zeigen:
- Fig. 1: eine schematische Darstellung einer Vorrichtung für das Laser-Durchstrahlfügen und des damit durchgeführten Fügeverfahrens, wobei Laserstrahlung vor Eintritt in ein lasertransmissives Bauteil diffus gestreut wird, und
- Fig. 2: eine schematische Darstellung eines weiteren Ausführungsbeispiels einer Vorrichtung für das Laser-Durchstrahlfügen und des damit durchgeführten Fügeverfahrens.

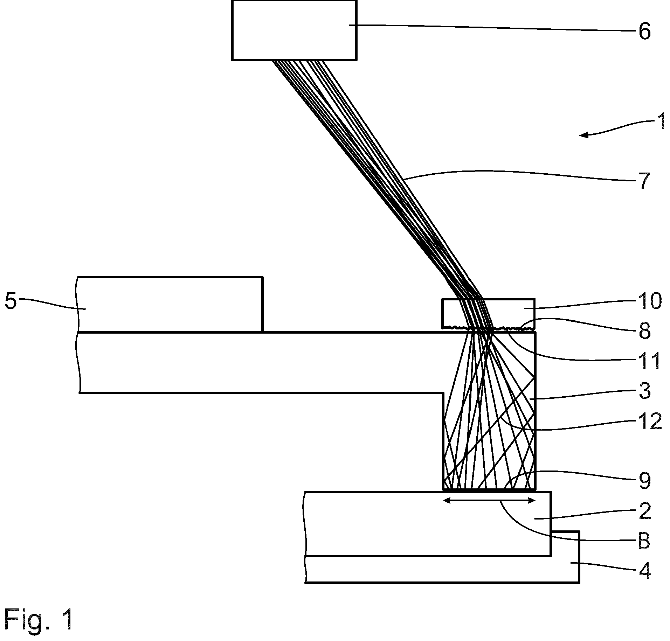

In Fig. 1 ist schematisch eine Vorrichtung 1 zum Laser-Durchstrahlfügen eines laserabsorbierenden Bauteils 2 mit einem lasertransmissiven Bauteil 3 gezeigt. Das laserabsorbierende Bauteil 2 ist aus einem thermoplastischen Kunststoff, beispielsweise aus einem Blend aus Polycarbonat und Acrylnitril-Butadien-Styrol (PC/ABS). Das lasertransmissive Bauteil 3 ist aus einem amorphen Thermoplasten, beispielsweise Polycarbonat. Die Bauteile 2, 3 sind in einer Fügeposition zueinander positioniert. Mithilfe eines Spannwerkzeugs aus einer Spannauflage 4 für das laserabsorbierende Bauteil 2 und einen Spannstempel 5 zum Anpressen des lasertransmissiven Bauteils 3 wird ein Fügedruck auf die Bauteile 2, 3 in der Fügeposition aufgebracht. Der Fügedruck kann abhängig von den zu fügenden Bauteilen 2, 3 gewählt werden. Ein beispielhafter Fügedruck beträgt ca. 2,5 N/mm².

Die Vorrichtung 1 weist einen Laserscanner 6 zur Einstrahlung von Laserstrahlung 7 auf. Mithilfe des Laserscanners 6 kann die Laserstrahlung 7 gezielt auf eine Einstrahlfläche 8 des lasertransmissiven Bauteils 3 eingestrahlt werden. Der Laserscanner 6 fährt mit der Laserstrahlung 7 einen Schweißweg ab, der in Fig. 1 im Wesentlichen senkrecht zur Zeichenebene verläuft, um die Bauteile 2, 3 entlang des Schweißweges in einem Schweißbereich 9 zu verschweißen. Ein Laser zur Erzeugung der Laserstrahlung 7 weist eine für den Schweißprozess erforderliche Leistung, beispielsweise etwa 195 W auf. Die Laserstrahlung 7 ist fokussiert. Ein Spotdurchmesser der fokussierten Laserstrahlung 7 im Bereich der Einstrahlfläche 8 ist an die zu erzeugende Schweißnaht angepasst, er kann beispielsweise 2,9 mm betragen.

Die Laserstrahlung 7 trifft nicht senkrecht auf die Einstrahloberfläche 8, sodass diese beim Eintritt in das lasertransmissive Bauteil 3 gebrochen wird. Beim Durchtritt der Laserstrahlung 7 durch das lasertransmissive Bauteil 3 kann dies insbesondere bei langen Durchtrittswegen zu einer starken Brechung, zu Totalreflexionen an seitlichen Grenzflächen und damit zu einer ungewollten Fokussierung auf einzelne Bereiche des Schweißbereichs 9 führen. Ein Verschweißen der Bauteile 2, 3 ist nicht über die gesamte Breite B des Schweißbereichs gewährleistet. Zudem könnte es zu Verbrennungen an einzelnen Bereichen der Bauteile 2, 3 kommen.

Um dies zu vermeiden, ist bei der Vorrichtung 1 eine Diffusorkomponente 10 im Bereich der Einstrahlfläche 8 auf dem lasertransmissiven Bauteil 3 angeordnet. Die Diffusorkomponente 10 ist aus einem lasertransmissiven Kunststoffmaterial, bevorzugt PMMA, gebildet. Die Diffusorkomponente 10 weist eine im Bereich der Einstrahlfläche 8 dem lasertransmissiven Bauteil 3 zugewandte Streufläche 11 auf. Die Streufläche 11 ist zur gezielten Streuung der Laserstrahlung 7 aufgeraut. Die Streufläche 11 weist einen Mittenrauwert von 0,5 µm bis 100 µm, bevorzugt von 3,2 µm bis 50 µm auf.

Mithilfe der Streufläche 11 wird die Laserstrahlung 7 direkt benachbart zur Einstrahlfläche 8 vor dem Eintritt in das lasertransmissive Bauteil 3 diffus gestreut. In Fig. 1 sind beispielhaft einzelne Strahlgänge der Laserstrahlung 7 sowie der gestreuten Laserstrahlung 12 eingezeichnet. Aufgrund der Streuung tritt die gestreute Laserstrahlung 12 mit unterschiedlichen Eintrittswinkeln in das lasertransmissive Bauteil 3 ein. Hierdurch erfolgt eine gleichmäßige Verteilung der gestreuten Laserstrahlung 12 innerhalb des lasertransmissiven Bauteils 3, wodurch ein homogener Energieeintrag über die gesamte Breite B des Schweißbereichs 9 gewährleistet ist.

Die Streufläche 11 der Diffusorkomponente 10 weist eine der Einstrahlfläche 8 entsprechende Oberflächenkontur auf. Bei dem in Fig. 1 gezeigten Beispiel ist dies eine ebene Fläche. In anderen, nicht figürlich gezeigten Ausführungsbeispielen kann das lasertransmissive Bauteil 3 im Bereich der Einstrahlfläche 8 eine unebene Oberfläche, insbesondere eine gekrümmte Oberfläche haben. Die Diffusorkomponente 10 ist an die Oberflächenkontur der Einstrahlfläche 8 angepasst. Die Diffusorkomponente 10 ist hierzu im Bereich der Streufläche 11 als Negativform des lasertransmissiven Bauteils 3 im Bereich der Einstrahlfläche 8 ausgebildet. Dies gewährleistet eine möglichst spaltfreie und passgenaue Anordnung der Diffusorkomponente 10 auf dem lasertransmissiven Bauteil 3. Luftspalte und andere Grenzflächen zwischen der Einstrahlfläche 8 und der Streufläche 11 sind vermieden.

Bei dem in Fig. 1 dargestellten Ausführungsbeispiel ist die Diffusorkomponente 10 als separate Komponente auf dem lasertransmissiven Bauteil 3 angeordnet. In anderen, nicht figürlich dargestellten Ausführungsbeispielen ist die Diffusorkomponente als Teil des Spannwerkzeugs, insbesondere als Teil des Spannstempels ausgebildet. Beispielsweise kann die Diffusorkomponente als lasertransmissives Durchtrittsfenster in dem Spannwerkzeug ausgebildet sein. Die Diffusorkomponente kann auch als Teilbereich eines lasertransmissiven Spannstempels, beispielsweise eines glasartigen Spannstempels, ausgebildet sein. Beispielsweise kann ein lasertransmissiver Spannstempel in einem der Einstrahlfläche zugewandtem Bereich eine aufgeraute Streufläche aufweisen.

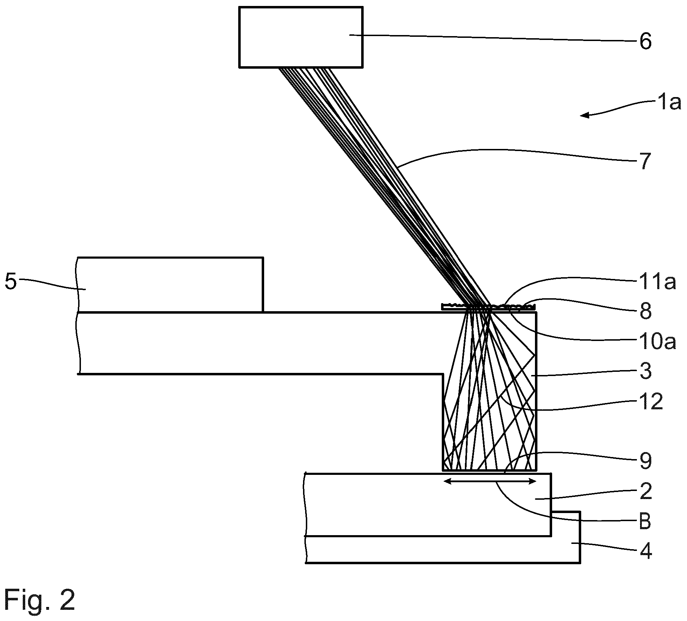

Mit Bezug auf Fig. 2 wird ein weiteres Ausführungsbeispiel einer Vorrichtung 1a für das Laser-Durchstrahlfügen beschrieben. Komponenten, die bereits mit Bezug auf das Ausführungsbeispiel in Fig. 1 beschrieben wurden, tragen die gleichen Bezugszeichen und werden nicht nochmals im Detail erläutert. Funktionell entsprechende, jedoch strukturell anders ausgestaltete Komponenten tragen entsprechende, um "a" ergänzte Bezugszeichen.

Das in Fig. 2 gezeigte Ausführungsbeispiel unterscheidet sich von dem in Fig. 1 gezeigten Ausführungsbeispiel nur in der Ausgestaltung der Diffusorkomponente 10a. Die Diffusorkomponente 10a ist eine lasertransmissive Folie mit einer Transmissivität von mehr als 20 %. Die Folie 10a ist auf das lasertransmissive Bauteil 3 im Bereich dessen Einstrahlfläche 8 aufgeklebt. Hierdurch ist die Diffusorkomponente 10a einfach und flexibel an unterschiedliche Oberflächenkonturen des lasertransmissiven Bauteils 3, insbesondere aufgrund von Fertigungstoleranzen, anpassbar.

Die Diffusorkomponente 10a ist auf der dem lasertransmissiven Bauteil 3 abgewandten Oberfläche aufgeraut zur Bildung einer Streufläche 11a. Das Aufrauen kann vor oder nach Aufkleben der Folie erfolgen.

## Patentansprüche

1. Verfahren zum Laser-Durchstrahlfügen zweier Bauteile mit den Schritten
- Bereitstellen eines lasertransmissiven Bauteils (3) und eines laserabsorbierenden Bauteils (2),
- Anordnen der Bauteile (2, 3) zueinander in einer Fügeposition,
- Aufbringen eines Fügedrucks auf die Bauteile (2, 3) in der Fügeposition, und
- Einstrahlen von Laserstrahlung (7) durch das lasertransmissive Bauteil (3) auf das laserabsorbierende Bauteil (2) zum Verschweißen der Bauteile (2, 3) in einem Schweißbereich (9),
**dadurch gekennzeichnet,**
- **dass** die Laserstrahlung (7) vor oder beim Eintritt in das lasertransmissive Bauteil (3) diffus gestreut wird und
- **dass** die Laserstrahlung (7) mittels einer Diffusorkomponente (10; 10a) gestreut wird, wobei die Diffusorkomponente (10; 10a) auf der Einstrahlfläche (8) des lasertransmissiven Bauteils (3) angeordnet ist.

2. Verfahren nach Anspruch 1, **dadurch gekennzeichnet, dass** die Laserstrahlung (7) auf den Schweißbereich (9) mittels eines Laserscanners (6) eingestrahlt wird, insbesondere im Quasi-Simultanschweißverfahren.

3. Verfahren nach einem der vorgenannten Ansprüche, **dadurch gekennzeichnet, dass** die Laserstrahlung (7) im Bereich einer Einstrahlfläche (8) des lasertransmissiven Bauteils (3) gestreut wird.

4. Verfahren nach einem der vorgenannten Ansprüche, **dadurch gekennzeichnet, dass** die Diffusorkomponente (10a) in Form einer lasertransmissiven Folie auf die Einstrahlfläche (8) des lasertransmissiven Bauteils (3) aufgebracht, insbesondere aufgeklebt, wird.

5. Verfahren nach einem der vorgenannten Ansprüche, **dadurch gekennzeichnet, dass** die Diffusorkomponente als Teil eines Spannwerkzeugs (4, 5) an dem lasertransmissiven Bauteil (3) angeordnet wird.

6. Verfahren nach einem der vorgenannten Ansprüche, **dadurch gekennzeichnet, dass** die Diffusorkomponente (10; 10a) eine aufgeraute Oberfläche (11; 11a) aufweist, insbesondere mit einem Mittenrauwert von 0,5 µm bis 100 µm, bevorzugt von 3,2 µm bis 50 µm.

7. Verfahren nach einem der vorgenannten Ansprüche, **dadurch gekennzeichnet, dass** die Laserstrahlung (7) auf eine Einstrahlfläche (8) des lasertransmissiven Bauteils (3) eingestrahlt wird, wobei die Einstrahlfläche (8) uneben, insbesondere gekrümmt, ist.

8. Fügeeinrichtung für das Laser-Durchstrahlfügen eines laserabsorbierenden Bauteils mit einem lasertransmissiven Bauteil,
aufweisend ein Spannwerkzeug (4, 5) zum Aufbringen eines Fügedrucks auf die Bauteile (2, 3) in einer Fügeposition,
**gekennzeichnet durch** eine Diffusorkomponente (10; 10a) zur diffusen Streuung von einzustrahlender Laserstrahlung (7) vor oder bei deren Eintritt in das lasertransmissive Bauteil (3), wobei die Diffusorkomponente als Teil des Spannwerkzeugs (4, 5) ausgebildet ist.

9. Fügeeinrichtung nach Anspruch 8, **dadurch gekennzeichnet, dass** die Diffusorkomponente (10; 10a) eine aufgeraute Oberfläche (11; 11a) aufweist, insbesondere mit einem Mittenrauwert von 0,5 µm bis 100 µm, bevorzugt von 3,2 µm bis 50 µm.

10. Fügeeinrichtung nach Anspruch 8 oder 9, **dadurch gekennzeichnet, dass** die Diffusorkomponente (10; 10a) an die Oberflächenkontur einer Einstrahlfläche (8) des lasertransmissiven Bauteils (3) angepasst ist, insbesondere eine Negativform des lasertransmissiven Bauteils (3) im Bereich der Einstrahlfläche (8) ist.

11. Fügeeinrichtung nach einem der Ansprüche 8 bis 10, **dadurch gekennzeichnet, dass** die Diffusorkomponente als Teil eines transparenten Spannstempels ausgebildet ist.

12. Fügeeinrichtung nach einem der Ansprüche 8 bis 11, **dadurch gekennzeichnet, dass** die Diffusorkomponente (10a) eine aufgeraute laser-transmissive Folie umfasst, die auf die Einstrahlfläche (8) aufbringbar, insbesondere aufklebbar, ist.

13. Vorrichtung für das Laser-Durchstrahlfügen eines laserabsorbierenden Bauteils mit einem lasertransmissiven Bauteil, aufweisend
- eine Fügeeinrichtung nach einem der Ansprüche 8 bis 12 und
- einen Laserscanner (6) zum Einstrahlen von Laserstrahlung (7) auf einen Schweißbereich (9).

## Claims

1. Method for laser transmission joining two components having the steps of
- providing a laser-transmissive component (3) and a laser-absorbing component (2),
- arranging the components (2, 3) relative to one another in a joining position,
- applying a joining pressure to the components (2, 3) in the joining position, and
- irradiating laser radiation (7) through the laser-transmissive component (3) onto the laser-absorbing component (2) in order to weld the components (2, 3) in a weld region (9),
**characterised in that**
- the laser radiation is diffusely scattered before or when entering the laser-transmissive component (3) and
- the laser radiation (7) is scattered by means of a diffuser component (10, 10a), wherein the diffuser component (10, 10a) is arranged on the irradiation surface (8) of the laser-transmissive component (3).

2. Method according to Claim 1, **characterised in that** the laser radiation (7) is irradiated onto the weld region (9) by means of a laser scanner (6), in particular in a quasi-simultaneous welding method.

3. Method according to one of the preceding claims, **characterised in that** the laser radiation (7) is scattered in the region of an irradiation surface (8) of the laser-transmissive component (3).

4. Method according to one of the preceding claims, **characterised in that** the diffuser component (10a) is applied, in particular bonded, to the irradiation surface (8) of the laser-transmissive component (3) in the form of a laser-transmissive film.

5. Method according to one of the preceding claims, **characterised in that** the diffuser component is arranged on the laser-transmissive component (3) as part of a clamping tool (4, 5).

6. Method according to one of the preceding claims, **characterised in that** the diffuser component (10, 10a) has a roughened surface (11, 11a), in particular with an average roughness of 0.5 µm to 100 µm, preferably 3.2 µm to 50 µm.

7. Method according to one of the preceding claims, **characterised in that** the laser radiation (7) is irradiated onto an irradiation surface (8) of the laser-transmissive component (3), wherein the irradiation surface (8) is uneven, in particular curved.

8. Joining device for laser transmission joining a laser-absorbing component with a laser-transmissive component,
having a clamping tool (4, 5) for applying a joining pressure to the components (2, 3) in a joining position,
**characterised by** a diffuser component (10, 10a) for diffusely scattering laser radiation (7) to be irradiated before or when entering the laser-transmissive component (3), wherein the diffuser component is designed as part of the clamping tool (4, 5).

9. Joining device according to Claim 8, **characterised in that** the diffuser component (10, 10a) has a roughened surface (11, 11a), in particular with an average roughness of 0.5 µm to 100 µm, preferably 3.2 µm to 50 µm.

10. Joining device according to Claim 8 or 9, **characterised in that** the diffuser component (10, 10a) is adapted to the surface contour of an irradiation surface (8) of the laser-transmissive component (3), in particular is a negative form of the laser-transmissive component (3) in the region of the irradiation surface (8).

11. Joining device according to one of Claims 8 to 10, **characterised in that** the diffuser component is designed as part of a transparent clamping ram.

12. Joining device according to one of Claims 8 to 11, **characterised in that** the diffuser component (10a) has a roughened laser-transmissive film, which can be applied, in particular can be bonded, to the irradiation surface (8).

13. Device for laser transmission joining a laser-absorbing component with a laser-transmissive component, having
- a joining device according to one of Claims 8 to 12 and
- a laser scanner (6) for irradiating laser radiation (7) onto a weld region (9).

## Revendications

1. Procédé d'assemblage laser par transmission de deux composants, comportant les étapes consistant à
- fournir un composant transparent au laser (3) et un composant absorbant le laser (2),
- disposer les composants (2, 3) l'un par rapport à l'autre dans une position d'assemblage,
- appliquer une pression d'assemblage sur les composants (2, 3) dans la position d'assemblage, et
- irradier un rayonnement laser (7) à travers le composant transparent au laser (3) sur le composant absorbant le laser (2) pour souder les composants (2, 3) dans une zone de soudage (9),
**caractérisé en ce que**
- le rayonnement laser (7) est dispersé de manière diffuse avant ou lors de l'entrée dans le composant transparent au laser (3), et
- le rayonnement laser (7) est dispersé au moyen d'un composant diffuseur (10 ; 10a), dans lequel le composant diffuseur (10 ; 10a) est disposé sur la surface d'irradiation (8) du composant transparent au laser (3).

2. Procédé selon la revendication 1, **caractérisé en ce que** le rayonnement laser (7) est irradié sur la zone de soudage (9) au moyen d'un scanner à laser (6), en particulier dans le procédé de soudage quasi simultané.

3. Procédé selon l'une des revendications précédentes, **caractérisé en ce que** le rayonnement laser (7) est dispersé dans la zone d'une surface d'irradiation (8) du composant transparent au laser (3).

4. Procédé selon l'une des revendications précédentes, **caractérisé en ce que** le composant diffuseur (10a) est appliqué, en particulier collé, sur la surface d'irradiation (8) du composant transparent au laser (3) sous la forme d'un film transparent au laser.

5. Procédé selon l'une des revendications précédentes, **caractérisé en ce que** le composant diffuseur est disposé sur le composant transparent au laser (3) comme une partie d'un outil de serrage (4, 5).

6. Procédé selon l'une des revendications précédentes, **caractérisé en ce que** le composant diffuseur (10 ; 10a) comporte une surface rugueuse (11 ; 11a), ayant en particulier une rugosité moyenne de 0,5 µm à 100 µm, de préférence de 3,2 µm à 50 µm.

7. Procédé selon l'une des revendications précédentes, **caractérisé en ce que** le rayonnement laser (7) est irradié sur une surface d'irradiation (8) du composant transparent au laser (3), dans lequel la surface d'irradiation (8) est inégale, en particulier incurvée.

8. Dispositif d'assemblage pour réaliser un assemblage laser par transmission d'un composant absorbant le laser avec un composant transparent au laser, comportant un outil de serrage (4, 5) pour appliquer une pression d'assemblage sur les composants (2, 3) dans une position d'assemblage,
**caractérisé par** un composant diffuseur (10 ; 10a) pour la dispersion diffuse du rayonnement laser (7) à irradier avant ou lors de son entrée dans le composant transparent au laser (3), dans lequel le composant diffuseur est formé comme une partie de l'outil de serrage (4, 5).

9. Dispositif d'assemblage selon la revendication 8, **caractérisé en ce que** le composant diffuseur (10 ; 10a) comporte une surface rugueuse (11 ; 11A), ayant en particulier une rugosité moyenne de 0,5 µm à 100 µm, de préférence de 3,2 µm à 50 µm.

10. Dispositif d'assemblage selon la revendication 8 ou 9, **caractérisé en ce que** le composant diffuseur (10 ; 10a) est adapté au contour de surface d'une surface d'irradiation (8) du composant transparent au laser (3), en particulier une forme négative du composant transparent au laser (3) dans la zone de la surface d'irradiation (8).

11. Dispositif d'assemblage selon l'une des revendications 8 à 10, **caractérisé en ce que** le composant diffuseur est formé comme une partie d'un poinçon de serrage transparent.

12. Dispositif d'assemblage selon l'une des revendications 8 à 11, **caractérisé en ce que** le composant diffuseur (10a) comprend un film rugueux transparent au laser qui peut être appliqué, en particulier collé, sur la surface d'irradiation (8).

13. Dispositif pour l'assemblage laser par transmission d'un composant absorbant le laser avec un composant transparent au laser, comportant
- un dispositif d'assemblage selon l'une des revendications 8 à 12 et
- un scanner à laser (6) pour irradier le rayonnement laser (7) sur une zone de soudage (9).
